# EUROPEAN PATENT SPECIFICATION

(11) **EP 2 825 811 B1**
(45) Date of publication and mention of the grant of the patent: **24.02.2016**
(21) Application number: 13720596.9
(22) Date of filing: 15.03.2013
(51) Int. Cl.: F16P 3/12

(54) **ELECTRIC CUTTING TOOL WITH SAFETY STOP**
ELEKTRISCHES SCHNEIDEWERKZEUG MIT SICHERHEITSANSCHLAG
OUTIL ÉLECTRIQUE DE DÉCOUPE AVEC BUTÉE DE SÛRETÉ

(30) Priority: 15.03.2012 IT FI20120055
(43) Date of publication of application: 21.01.2015
(73) Proprietor: Flash Elettronica di Duccio Gemignani, 50065 Pontassieve (IT)
(72) Inventor: GEMIGNANI, Duccio, I-50065 Pontassieve (IT)
(74) Representative: Boggio, Luigi
(86) International application number: PCT/IB2013/052100
(87) International publication number: WO 2013/136311

(56) References cited:
- EP-A1- 0 636 830
- WO-A1-03/027565
- DE-A1- 19 501 579
- DE-A1-102004 015 976
- DE-A1-102009 045 944
- FR-A1- 2 712 837

## Description

### TECHNICAL FIELD OF INVENTION

The present invention relates to the field of cutting tools, in particular portable electric tools, such as scissors or garden shears with trigger activation or similar progressive regulators, which can be used in farming and plant-growing (pruning of olive trees and of fruit trees in general), wine-growing or horticulture. In particular, it relates to a tool equipped with a safety system for preventing accidents or injury to user's fingers and undesired cutting, and consequent damaging, of installation elements extraneous to the cutting operation, such as support wires (known as "trellis wires") in the field of vineyard pruning operations.

### STATE OF THE ART

The use of tools ascribable to the aforementioned type entails significant problems linked to the risk of accidents, especially to the hand not holding the tool, or the undesired cutting of installation components present in the cutting area for various reasons, often closely linked to the parts to be cut. The case of trellis wires or twines that innervate vineyards is quite typical. The operator is obviously given lessons or has gained experience on work practices able to minimize the risk of accidents. Despite this, due to haste in carrying out the required operations, ever-possible inattention, or simply bad luck, the current incidence of accidents and damage is significant.

When they arise, these problems entail high costs, both health-wise and related to the repair of damaged installations, as well as restoring the tool, which, in the event of undesired interference with non-wooden bodies, results in the need to at least re-sharpen the blades, if not outright repairs, or even replacement when the accident resulted in irreparable damage. The indicative incidence can be approximately quantified in an accident and in roughly 1,000 cut metal wires for 20,000 hours of vineyard pruning work, which helps to understand the seriousness of the matter.

Passive protective items are sometimes used to avert accidents, such as gloves of metallic mail, which are extremely heavy and uncomfortable to use.

Active electronic control systems for stopping tools and based on the use of gloves of metallic mail have also been proposed in the past. For example, French patent application FR 2 712 837 A1 describes a safety device for a cutting tool equipped with cutting means (blades, for example) operated by a motor, the power supply of which is controlled by a user-operated switch. In particular, the safety device according to FR 2 712 837 A1 comprises an electrical protection circuit composed of:
- an electrically conductive element that covers the anatomical region of the user's body to be protected (for example, in order to protect the hand, a user must wear, in use, a glove of metallic mail);
- a first electrical connection established between the electrically conductive element and one of the two poles of an electrical power source; and
- a second electrical connection established between the other pole of the electrical power source and the cutting means of the tool.

In use, when the cutting means are not in contact with the electrically conductive element, the electrical protection circuit is open, while, when the cutting means are in contact with the electrically conductive element, the electrical protection circuit closes. In addition, the safety device according to FR 2 712 837 A1 also comprises an electronic circuit configured to detect the closure of the protection circuit. In use, when said electronic circuit detects the closing of the protection circuit, it opens or controls the opening of the circuit between the motor and the respective power supply so as to halt the cutting movement of the cutting means.

In addition, active electronic control systems for stopping tools based on remote detection via electromagnetic waves have also been proposed. These types of systems are lacking on the side of precision and reliability, as well as being complex to set up. Furthermore, in this way, it is difficult to make the tool versatile, i.e. adaptable to different types of cutting operation. According to other known systems, it is still necessary for the user to wear special items that incorporate transmitting, receiving or conductive means. Also in this case, usage is awkward and there is an increase in system complexity, as well as a basic inadequacy regarding certain tools, such as the hand shears or scissors used for pruning.

Lastly, active electronic safety systems have also been proposed for automatically stopping hand-held power tools, such as electric drills. For example, German patent application DE 10 2009 045944 A1 describes a hand-held power tool that comprises:
- a housing having a handgrip portion;
- a tool area for a tool piece, for example, a drill bit or a blade, operated with linear and/or oscillatory motion;
- a control unit located on one side of the housing for user activation of the tool piece and/or hand-held power tool;
- a drive unit for operating the tool piece, that is to say for generating a working movement of the tool piece;
- an electronic unit for controlling the operation of the drive unit; and
- a power supply unit for supplying electrical power.

In addition, the hand-held power tool described in DE 10 2009 045944 A1 also comprises a protection unit that comprises a proximity or contact sensor to detect a part of the user's body approaching or making contact with the tool area and which is configured to halt operation of the drive unit when a part of the user's body approaches or makes accidental contact with the tool area.

In any case, no systems have been found that, at the same time, are also able to supply a solution to the problem of undesired cutting of extraneous elements, such as vineyard support wires.

### OBJECT AND SUMMARY OF THE INVENTION

The object of the present invention is therefore that of providing a safety system for a hand-held cutting tool that is able to solve the problem of accidents and also to avoid damaging installation components, such as vineyard support wires.

The above-stated object is achieved by the present invention in that it relates to a cutting kit, as defined in the appended claims.

### BRIEF DESCRIPTION OF THE DRAWINGS

For a better understanding of the present invention, some preferred embodiments, provided by way of non-limitative example, will now be described with reference to the attached drawings (non to scale), where:
- Figure 1 is a schematic representation of the operating principle upon which the present invention is based; and
- Figure 2 schematically shows a tool according to the invention, together with a schematic circuit representation of the related control system in accordance with the operating principle in Figure 1.

### DETAILED DESCRIPTION OF PREFERRED EMBODIMENTS OF THE INVENTION

The following description is provided to enable an expert in the field to embody and use the invention. Various modifications to the embodiments shown will be immediately obvious to experts and the generic principles described herein could be applied to other embodiments and applications without departing- from the scope of protection of the present invention.

Thus, the present invention is not intended to be limited to the embodiments described and shown herein, but is to be accorded the widest scope consistent with the principles and features disclosed herein and defined in the appended claims.

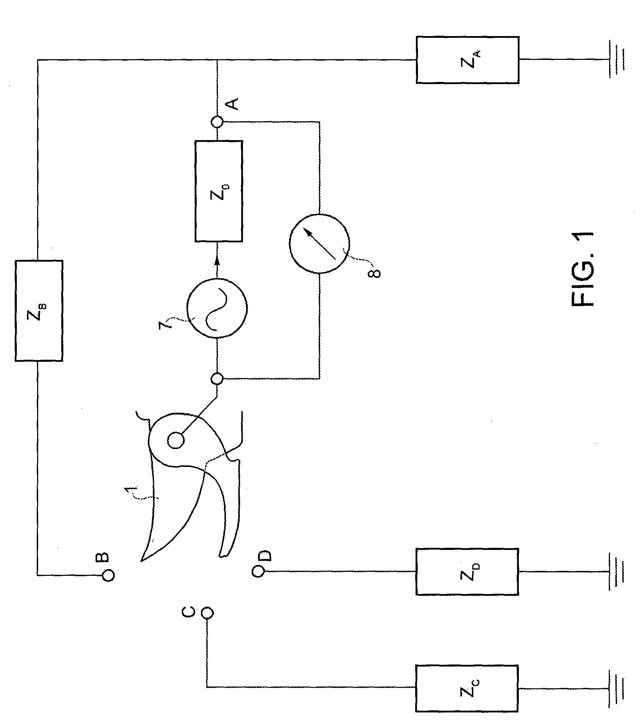

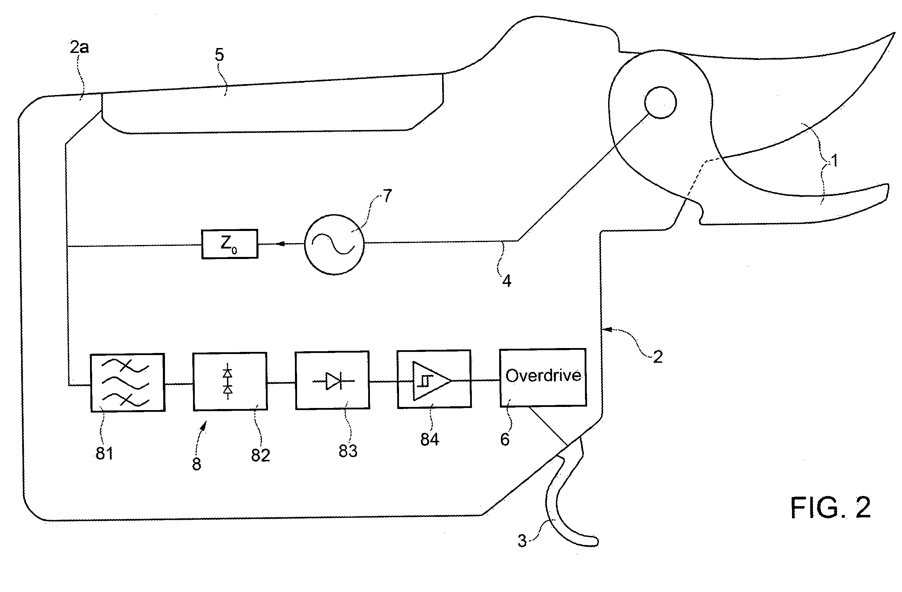

With reference to the aforementioned Figures 1 and 2, the heart of the invention resides in an electronic circuit inserted inside a tool that, in other ways - and for its own mechanical configuration in particular - is conventional, and therefore as schematically (and not realistically) represented in Figure 2, equipped with a blade 1, typically hinged, a box body 2 made of an electrically non-conductive material (except where specified below) with a handgrip back 2a, and a command and control trigger 3. In the same way, the control circuit configuration (not shown) is traditional, controlling the movement of the blades 1 through the trigger 3 and an actuation or driving circuit with electromechanical actuator means, such that activation of the trigger results in closing the blades and release of the trigger results in the opposite, opening movement, in the known manner. The required power is supplied by a power circuit and associated battery, which is normally located outside the body 2, for example, in a rucksack that the user wears and which is wired to the body 2.

To start with, the safety control circuit according to the invention, and in accordance with a base configuration, envisages placing the blades 1 in electrical contact, via a circuit line 4, with a small plate 5 made of an electrically conductive material (typically metal) arranged to extensively cover the handgrip back 2a so that it is necessarily in contact with the hand of the user that grips the tool. In order not to introduce parasite impedances that could cause measurement noise (described in greater detail below), the small plate preferably has a capacitance with respect to the internal structure that is less than or equal to 100pf. In consequence, provision is also made for measuring the voltage on said connection and, in response to a detection below a predetermined threshold value (as will be seen further on), disabling the closing function of the blades 1 and actually activating the instantaneous opening, whatever the position of the trigger 3, through an override block 6 that interacts with the control circuit, disconnecting it immediately downstream from the trigger 3.

In greater detail, an alternating voltage generator 7, shown together with the relative impedance having a known value and indicated as Zo, is placed on the line 4. The generator 7 is a generator of a low working voltage Vo, not more than 25 V and preferably of 5 V, to not cause annoyance or risks for the operator, with a suitable working frequency for ensuring rapidity and invariance of measurement (as will be explained further on), for example, 100 kHz. The energy consumed by the generator is drawn from battery means (not shown).

As disclosed, the invention also provides for detecting/measuring means 8, for example, and in particular, means for measuring the drop in voltage on the line 4, symbolically indicated (and without claim to circuit realism) in Figure 2 by a connection between the line 4 and the override block 6. The connection comprises, always schematically and by way of example, an (optional) input filter 81 (for noise filtering), a protection circuit 82 (for electrostatic discharge protection), a peak detector 83 and, finally, a programmable decision block 84 capable of governing the override block 6 in response to the detection by the measuring means 8.

With reference to this last aspect, Figure 1 in particular should be carefully looked at to understand the operational behaviour of the invention in greater detail. The point indicated by A represents the contact between the tool and the hand of the person holding it, made through the small plate 5. Points B, C and D, instead, represent hypothetical points of contact between the blades 1 and, respectively, the user's other hand, a metal wire (external installation element that must not be damaged) and a plant stem (material to be pruned). Correspondingly, we have: an impedance Z_{B} caused by the accidental creation of a circuit bridge by part of the user's body between the user's two hands; an impedance Z_{C} caused by the accidental creation of a circuit bridge between the handgrip hand and ground through the metal wire; and an impedance Z_{D} caused by the creation of a circuit bridge between the handgrip hand and ground through the plant stem (normal during ordinary use of the tool).

According to a preferred embodiment, thanks to which the tool is in fact able to solve the installation problem in addition to that of accident prevention, the user must wear electrically conductive socks and footwear, for example, footwear with a metallic under-shoe accessory in contact with a sock made with metallic fibres or, more in general, with a material able to provide electrical conductivity. In this way, there will also be an impedance Z_{A} caused by the creation of a circuit bridge by part of the user's body between the handgrip hand and ground, through the feet.

Impedance Zo is a known value and determined in the design phase on the basis of the typical impedance values involved. Z_{C} and Z_{D} are supporting conditions, which can be assumed to have values that are known or, in any case, easily determinable or conditioned (as will be explained in the following) and substantially unchanging (or variable within a range not large enough to be significant for correct operation of the tool). Impedance Z_{B} will have a value inversely proportional to the pressure exerted by the blades on the user's skin, i.e. it decreases as the pressure increases. To the contrary, Z_{A} will have a fixed value, but which can be optimized by selecting the desired conductivity characteristics for the wearable accessories (socks and footwear).

The decision block 84 will be consequently programmed so as to have a threshold value V_{T} set that corresponds to the voltage generated when impedance Z_{B} reaches a value Z_{T} caused by the pressure of the blades that approximates to that capable of causing injury to the user's hand. This impedance value and the corresponding threshold value can be easily determined on an empirical basis and by applying Ohm's Law, as V_{T} = V_{O} Zo · Vo/(Zo + Z_{T}). Typically, the value of Z_{T} can be approximately 2700 Ohm. If Zo is set approximately equal to Z_{T}, voltage V_{T} will be approximately half the power supply voltage Vo.

The line 4 is kept energized by the generator 7. In normal use of the tool, and therefore first of all with the blades 1 open and inactive, current does not pass through the line 4 as the circuit is open, and the detector 8 reads a voltage corresponding to that of the generator 7 without any drop. In consequence, no alarm control signal, with consequent opening of the blades 1, will be issued. Considering the normal operation of the tool (for the moment, without wearing conductive socks or footwear, and therefore without the bridge to Z_{A} in Figure 1), no circuit closing is performed in this case either, and therefore there is no interference of the safety circuit on the normal command/control functioning of the blades 1 as imparted by the trigger 3.

However, if a finger of the operator accidentally comes into contact with the blades, the circuit is closed with the consequent passage of current and therefore a voltage drop on the line 4. There will be a rapid drop in impedance in the circuit, and consequently the voltage read will drop towards the threshold value V_{T}. If, and immediately when, this value is reached, the decision block 84 will intervene to stop the closing movement of the blades 1, and actually command the immediate reopening, always with the aid of the override block 6, which neutralizes and overrides the activation and control command from the trigger 3.

Now, considering the use of conductive socks and footwear as well, and therefore the damage-prevention functionality, the creation of the bridge to ground with impedance Z_{A} will not have any significant effect on the previously described operational dynamics. In this case, the closing of the circuit at D (cutting a plant stem) closes the circuit to ground, setting Z_{D} and Z_{A} in series. However, as impedance Z_{D} is definitely at least an order of magnitude greater than impedance Z_{T}, the current flow will be insignificant and the value measured by the detector 8, inversely proportional to the current, will consequently be high and certainly higher than the threshold value V_{T}.

Nevertheless, when the blades 1 accidentally make contact with a conductive installation element, thereby closing the circuit at C, the closure will be made with passage to ground and impedances Z_{C} and Z_{A} in series. The sum of these impedances is without doubt lower than Z_{T}, due to the high conductivity of the external installation element. Therefore, in this case, the passage of current and the consequent voltage detected will be such as to trigger the provided safety stop.

Ultimately, then, with the safety system according to the invention kept constantly active, and even made not deactivatable if desired, it is possible to keep what the blades 1 come into contact with under close control, differentiating between whether or not it is necessary to take action in the form of an indiscriminate open blades command. By optimizing the design specifications on the basis of the foregoing, it is possible to ensure rapid action in the order of a thousandth of a second, thus offering a complete guarantee of integrity of what is about to be accidentally cut.

The action is differentiated as a consequence of the variations in impedance of the different circuit bridges that can be closed, evaluating these variations through voltage (or current) measurements that develop as a consequence of these variations.

Although the tool will be completely self-sufficient with regard to the accident-prevention function, the damage-prevention function will need a few accessories to be supplied, primarily composed of the aforementioned conductive socks and footwear. The socks, made of a conductive material, will be chosen to ensure a resistance of less than 10 Ohm per cm². A supplied clip will provide the electrical contact, a wired one for example, with a metal component of an under-shoe accessory, which in turn will discharge to ground, for example through slightly projecting teeth or small studs with rounded tips, all to ensure a contact with hand-ground impedance through the body (Z_{A}) of less than 1000 Ohm. The under-shoe accessory can therefore be represented by a simple ring-like elastic lace into which a normal shoe can be inserted, ensuring that the metal or generically conductive component is located on the outer face of the sole and protruding from it. If necessary, dedicated footwear could also be made, with a metal portion integrated in the sole and fitted with an internal contact for the sock.

Always with reference to the damage-prevention function, certain types of installations can have characteristics such that such a low impedance Z_{C} (less than 1000 Ohm, here as well) to ensure reliable functioning is not provided. This can be the case, for example, of vineyards with metal wire that extends little in length between two wooden support stakes. In this kind of situation, after a preliminary check on the impedance through commonly available measuring instruments, or anyway obviously implementable in a "dedicated" variant, it will be sufficient to equip the installation with stakes made of iron or a similar conductive material in order to improve the ground connection of the metal wire closely intertwined with the plant component and for which accidental damage must be avoided.

If necessary, similar measuring instruments can be employed to check the correct operation of the accessories worn and, more in general, that the values of the impedances involved, in particular of those determining the external conditions, namely Z_{A}, Z_{B} and Z_{C}, are compatible with fully effective and reliable use of the tool. In both cases, the aforementioned measuring instruments could, for example, provide a circuit similar to the safety circuit of the tool, with opportune external contacts integrated in simple poles or rods that can be easily handled even by non-experts, such as farm workers.

In the case where weather conditions, or any other situations, require the use of gloves, these must be made of a conductive material (resistivity below 10 Ohm per cm²), so as not to break the electrical contact between the hands and, respectively, the small plate 5 and (accidentally) the blades 1. However, the greater electrical conductivity that will consequently occur between the blades 1 and the hand that accidentally finishes within their range of action will give even greater effectiveness to the accident prevention functionality of the safety circuit.

The various blocks that form the safety circuit can be produced both by just discrete cooperating components, for the decisional aspect, by microprocessor means (as shown in the example), and numerical programming techniques on DSP (Digital Signal Processing) processors, all -according to implementation techniques well known or obvious to an expert in the field.

The voltage detection to which reference has been made could obviously be replaced by equivalent principles of implementation and results with respect to that described above.

Use of the tool according to the invention does not entail safety problems regarding the currents and voltages involved, as the safety circuit works at a low voltage (for example 5 V) and with a maximum current of below 2 mA, and therefore with parameters universally acknowledged and declared as devoid of any hazardous physiological effect.

The invention thus provides an extremely effective solution to the problems posed by the known art and described in the introductory part, this solution being technically simple and inexpensive to manufacture. Apart from the above-indicated optional accessories, which are passive, inexpensive to manufacture and absolutely without contraindications and which, in any case, do not cause any disturbance to operator comfort and operations in general, the tool is self-sufficient and does not use complex systems (exposed to faults, errors and the influence of external agents) such as those that, for example, distinguish distance to avoid contact. On the contrary, this solution looks for incipient contact, though still stopping the blades before they can injure the user. With the optional accessories, falling within the area of passive accessories that can be made available with minimal adaptation with respect to that already present on the market, the detection principle on which the invention is based can, at the same time, also provide solution to the problem of damaging the installation.

Ultimately, the preventive action of the circuit according to the invention does not cause any complication or inconvenience in normal use of the cutting tool. The latter, beyond the preferred example of embodiment in which the solution regards scissors or shears (two blades turning around a hinge point), could in principle adopt different cutting systems, such as reciprocating blades for example. In any event, the safety circuit will be implemented using similar techniques to those described above.

The present invention has in any case been described heretofore with reference to its preferred embodiments. It is understood that there could be other embodiments concerning the same inventive kernel, all falling within the scope of protection defined in the claims set forth hereinafter.

## Claims

1. A cutting kit comprising a hand-held cutting tool that comprises:
• a box body (2) made of an electrically non-conductive material;
• a handgrip (2a) for a hand of a user provided on said body (2);
• cutting means (1) made of an electrically conductive material extending from said body (2);
• an electric driving circuit arranged within said body (2) for driving said cutting means (1);
• command and control means (3) of said driving circuit arranged on said handgrip (2a); and
• a safety circuit (4) adapted to intervene on said driving circuit to control said cutting means (1) independently of the control of said command and control means (3), said safety circuit (4) comprising
- an electrically conductive element (5) located on the handgrip (2a), in a manner to be in contact with the hand that holds the tool,
- a circuit line that connects said cutting means (1) to said electrically conductive element (5),
- electric power generation means (7) arranged in said circuit line,
- voltage or current detecting means (83) arranged in said circuit line, and
- control means (84, 6) adapted to intervene on said driving circuit in response to the detection of said detecting means (83), when a predetermined threshold value is exceeded, to override the control of said command and control means (3) and force at least the stopping of the operation of said cutting means (1);
wherein said threshold value is a value corresponding to a value detected when said cutting means (1) accidentally make contact with, and are in the stage of incipient injury to, the hand of the user not holding the tool;
the cutting kit being **characterized in that** it also comprises footwear means that can be worn by the user to ensure electrical conductivity between at least one of the user's feet and the ground, said footwear means being adapted to create an impedance on the circuit bridge formed between the handgrip hand and ground at least less than half the impedance that is created on a circuit closing bridge external to the tool, through the user's body, between said cutting means (1) and said electrically conductive element (5), in said stage of incipient injury corresponding to said threshold value.

2. The cutting kit of claim 1, wherein said footwear means are adapted to create an impedance between the handgrip hand and ground equal to approximately 1000 Ohm.

3. The cutting kit according to claim 1 or 2, wherein said footwear means comprise at least one accessory suitable for being worn on at least one of the user's shoes and equipped with a conductor element arranged to be exposed on the outer face of the sole, and at least one sock made of an electrically conductive material, with contact means adapted to place said conductor element in electrical connection with said sock.

4. The cutting kit according to any preceding claim, further comprising a pair of protective gloves at least partially made of an electrically conductive material.

5. The cutting kit according to any preceding claim, further comprising instruments for measuring an electrical impedance at least between a metal portion of an installation where damage by said cutting means (1) is to be prevented and ground.

6. The cutting kit of claim 5, wherein said measuring instruments envisage a circuit similar to the safety circuit (4) of the tool, with opportune external contacts, integrated on a pole or rod-like support.

7. The cutting kit according to claim 5 or 6, further comprising conductive means with which to equip said installation to reduce said electrical impedance, if necessary.

8. The cutting kit according to any preceding claim, wherein said electric power generation means comprise an alternating voltage generator (7) and wherein said detecting means (83) comprise voltage detection means adapted to control said control means (84, 6) when the detected voltage is equal to or less than a threshold voltage value (V_{T}).

9. The cutting kit of claim 8, wherein said voltage generator (7) is a generator with low working voltage (Vo) and impedance (Zo) approximately equal to the impedance created on a circuit closing bridge external to the tool, through the user's body, between said cutting means (1) and said electrically conductive element (5), in said stage of incipient injury; said threshold voltage value (V_{T}) being equal to approximately half of said working voltage (Vo) of said voltage generator (7).

10. The cutting kit of claim 9, wherein said voltage generator (7) is a generator with a working voltage of 5 V and working frequency of 100 kHz.

11. The cutting kit according to any preceding claim, wherein said electrically conductive element (5) comprises a small metal plate that extensively covers a substantial portion of said handgrip (2a).

12. The cutting kit according to any preceding claim, wherein said cutting means (1) comprise blades pivoting around a hinge; said control means (84, 6) being adapted to control the opening of said blades when said threshold value is reached.

## Patentansprüche

1. Schneid-Kit mit einem Hand-Schneidewerkzeug, welches aufweist:
• einen Box-Körper (2) aus einem elektrisch nicht leitfähigen Material;
• einen an dem Körper (2) vorgesehenen Handgriff (2a) für eine Hand eines Benutzers;
• eine sich von dem Körper (2) erstreckende Schneideinrichtung (1) aus einem elektrisch leitfähigen Material;
• eine in dem Körper (2) angeordnete elektrische Antriebsschaltung zum Antreiben der Schneideinrichtung (1);
• eine an dem Handgriff (2a) angeordnete Steuer- und Kontrolleinrichtung (3) der Antriebsschaltung; und
• eine Sicherheitsschaltung (4), die geeignet ist, gegen die Antriebsschaltung zu intervenieren, um die Schneideinrichtung (1) unabhängig von der Steuerung durch die Steuer- und Kontrolleinrichtung (3) zu steuern, wobei die Sicherheitsschaltung (4) aufweist:
- ein elektrisch leitfähiges Element (5), das derart an dem Handgriff (2a) angeordnet ist, dass es in Kontakt mit der das Werkzeug haltenden Hand ist,
- eine Schaltungsleitung, welche die Schneideinrichtung (1) mit dem elektrisch leitfähigen Element (5) verbindet,
- eine in der Schaltungsleitung angeordnete Stromerzeugungseinrichtung (7),
- eine in der Schaltungsleitung angeordnete Spannungs- oder Stromdetektionseinrichtung (83), und
- eine Steuereinrichtung (84, 6), die geeignet ist, in Reaktion auf das durch die Detektionseinrichtung (83) erfolgende Detektieren gegen die Antriebsschaltung zu intervenieren, wenn ein vorbestimmter Schwellenwert überschritten wird, um die durch die Steuer- und Kontrolleinrichtung (3) erfolgende Steuerung außer Kraft zu setzen und zumindest das Anhalten des Betriebs der Schneideinrichtung (1) zu erzwingen;
wobei der Schwellenwert ein Wert ist, welcher einem Wert entspricht, der detektiert wird, wenn die Schneideinrichtung (1) die das Werkzeug nicht haltende Hand des Benutzers unbeabsichtigt berührt und sich im Zustand einer drohenden Verletzung derselben befindet;
wobei das Schneid-Kit **dadurch gekennzeichnet ist, dass** es ferner Fußbekleidungsmittel aufweist, die von dem Benutzer getragen werden können, um die elektrische Leitfähigkeit zwischen mindestens einem Fuß des Benutzers und dem Boden zu gewährleisten, wobei die Fußbekleidungsmittel geeignet sind, im Zustand einer drohenden Verletzung entsprechend dem Detektionswert eine Impedanz an der zwischen der den Handgriff haltenden Hand und dem Boden gebildeten Brückenschaltung, die zumindest geringer als die Hälfte der Impedanz ist, welche an einer außerhalb des Werkzeugs befindlichen Schaltungsschließbrücke erzeugt wird, durch den Körper des Benutzers zwischen der Schneideinrichtung (1) und dem elektrisch leitfähigen Element (5) zu erzeugen.

2. Schneid-Kit nach Anspruch 1, bei welchem die Fußbekleidungsmittel geeignet sind, zwischen der den Handgriff haltenden Hand und dem Boden eine Impedanz zu erzeugen, die ungefähr gleich 1000 Ohm ist.

3. Schneid-Kit nach Anspruch 1 oder 2, bei welchem die Fußbekleidungsmittel mindestens ein Zubehörteil aufweisen, das geeignet ist, an mindestens einem der Schuhe des Benutzers getragen zu werden und mit einem Leiterelement versehen ist, das auf der Außenseite der Sohle freiliegend angeordnet ist, und mindestens eine aus einem elektrisch leitfähigen Material hergestellten Socke mit Kontakteinrichtungen, die geeignet sind, das Leiterelement in elektrischen Kontakt mit der Socke zu bringen.

4. Schneid-Kit nach einem der vorhergehenden Ansprüche, ferner mit einem Paar Schutzhandschuhe, die zumindest teilweise aus einem elektrisch leitfähigen Material bestehen.

5. Schneid-Kit nach einem der vorhergehenden Ansprüche, ferner mit Instrumenten zum Messen einer elektrischen Impedanz zumindest zwischen einem metallischen Bereich einer Installation, in dem eine Beschädigung durch die Schneideinrichtung (1) verhindert werden soll, und dem Boden.

6. Schneid-Kit nach Anspruch 5, bei welchem die Messinstrumente eine Schaltung, die der Schutzschaltung (4) des Werkzeugs ähnlich ist, mit geeigneten externen Kontakten bilden, welche in eine Stange oder eine stangenartige Stütze integriert ist.

7. Schneid-Kit nach Anspruch 5 oder 6, ferner mit leitfähigen Einrichtungen, mit welchen die Installation versehen werden kann, um bei Bedarf die elektrische Impedanz zu verringern.

8. Schneid-Kit nach einem der vorhergehenden Ansprüche, bei welchem die Stromerzeugungseinrichtung einen Wechselspannungsgenerator (7) aufweist, und wobei die Detektionseinrichtung (83) eine Spannungsdetektionseinrichtung aufweist, die geeignet ist, die Steuereinrichtung (84, 6) zu steuern, wenn die detektierte Spannung gleich oder geringer als ein Spannungsschwellenwert (V_{T}) ist.

9. Schneid-Kit nach Anspruch 8, bei welchem der Spannungsgenerator (7) ein Generator mit einer niedrigen Arbeitsspannung (Vo) und einer Impedanz (Zo) ist, die ungefähr gleich der Impedanz ist, welche im Zustand einer drohenden Verletzung an der außerhalb des Werkzeugs befindlichen Schaltungsschließbrücke durch den Körper des Benutzers zwischen der Schneideinrichtung (1) und dem elektrisch leitfähigen Element (5) erzeugt wird; wobei der Spannungsschwellenwert (V_{T}) gleich ungefähr der Hälfte der Arbeitsspannung (Vo) des Spannungsgenerators (7) ist.

10. Schneid-Kit nach Anspruch 9, bei welchem der Spannungsgenerator (7) ein Generator mit einer Arbeitsspannung von 5 V und einer Arbeitsfrequenz von 100 kHz ist.

11. Schneid-Kit nach einem der vorhergehenden Ansprüche, bei welchem das elektrisch leitfähige Element (5) eine kleine Metallplatte aufweist, die einen wesentlichen Teil des Handgriffs (2a) weitgehend abdeckt.

12. Schneid-Kit nach einem der vorhergehenden Ansprüche, bei welchem die Schneideinrichtung (1) um ein Gelenk verschwenkbare Klingen aufweist; wobei die Steuereinrichtung (84, 6) dazu geeignet ist, die Öffnung der Klingen zu steuern, wenn der Schwellenwert erreicht ist.

## Revendications

1. Ensemble de coupe comprenant un outil coupant manuel, qui comprend :
. un corps de boîte (2) constitué d'un matériau non conducteur de l'électricité ;
. une poignée (2a) pour une main d'un utilisateur, prévue sur ledit corps (2) ;
. des moyens de coupe (1) constitués d'un matériau conducteur de l'électricité s'étendant à partir dudit corps (2) ;
. un circuit de pilotage électrique disposé dans ledit corps (2) pour le pilotage desdits moyens de coupe (1) ; ;
. des moyens de commande et de contrôle (3) dudit circuit de pilotage, disposés sur ladite poignée (2a) ; et
. un circuit de sécurité (4) adapté pour intervenir sur ledit circuit de pilotage pour contrôler lesdits moyens de coupe (1) indépendamment du contrôle desdits moyens de commande et de contrôle (3), ledit circuit de sécurité (4) comprenant :
- un élément conducteur de l'électricité (5) situé sur la poignée (2a) de manière à entrer en contact avec la main qui tient l'outil,
- une ligne de circuit qui connecte lesdits moyens de coupe (1) audit élément conducteur de l'électricité (5),
- des moyens de génération d'énergie électrique (7) disposés sur ladite ligne de circuit,
- des moyens de détection de tension ou de courant (83) disposés sur ladite ligne de circuit, et
- des moyens de contrôle (84, 6) adaptés pour intervenir sur ledit circuit de pilotage en réponse à la détection desdits moyens de détection (83), lorsqu'une valeur seuil prédéterminée est dépassée, pour prendre le pas sur le contrôle desdits moyens de commande et de contrôle (3) et forcer au moins l'arrêt du fonctionnement desdits moyens de coupe (1) ;
ladite valeur seuil étant une valeur correspondant à une valeur détectée lorsque lesdits moyens de coupe (1) entrent accidentellement en contact avec la main de l'utilisateur ne tenant pas l'outil et sont sur le point de le blesser ;
l'ensemble de coupe étant **caractérisé en ce qu'**il comprend également des moyens chaussants qui peuvent être portés par l'utilisateur pour assurer une conductivité électrique entre au moins l'un des pieds de l'utilisateur et la terre, lesdits moyens chaussants étant adaptés pour créer une impédance sur le pont de circuit formé entre la main tenant la poignée et la terre, au moins inférieure à la moitié de l'impédance qui est créée sur un pont de fermeture de circuit externe à l'outil, via le corps de l'utilisateur, entre lesdits moyens de coupe (1) et ledit élément conducteur de l'électricité (5), audit stade de blessure imminente correspondant à ladite valeur seuil.

2. Ensemble de coupe selon la revendication 1, dans lequel lesdits moyens chaussants sont adaptés pour créer une impédance entre la main tenant la poignée et la terre égale à environ 1000 Ohms.

3. Ensemble de coupe selon la revendication 1 ou 2, dans lequel lesdits moyens chaussants comprennent au moins un accessoire approprié pour être porté sur au moins l'une des chaussures de l'utilisateur et équipé d'un élément conducteur disposé de façon à être exposé sur la face extérieure de la semelle, et au moins une chaussette constituée d'un matériau conducteur de l'électricité, avec des moyens de contact adaptés pour placer ledit élément conducteur en connexion électrique avec ladite chaussette.

4. Ensemble de coupe selon l'une quelconque des revendications précédentes, comprenant en outre une paire de gants protecteurs au moins partiellement constitués d'un matériau conducteur de l'électricité.

5. Ensemble de coupe selon l'une quelconque des revendications précédentes, comprenant en outre des instruments pour mesurer une impédance électrique au moins entre une partie métallique d'une installation dans laquelle des dommages par lesdits moyens de coupe (1) doivent être empêchés, et la terre.

6. Ensemble de coupe selon la revendication 5, dans lequel lesdits instruments de mesure prévoient un circuit similaire au circuit de sécurité (4) de l'outil, avec des contacts externes opportuns, intégrés sur un support de type barre ou tige.

7. Ensemble de coupe selon la revendication 5 ou 6, comprenant en outre des moyens conducteurs avec lesquels équiper ladite installation pour réduire ladite impédance électrique, si nécessaire.

8. Ensemble de coupe selon l'une quelconque des revendications précédentes, dans lequel lesdits moyens de génération d'énergie électrique comprennent un générateur de tension alternative (7) et dans lequel lesdits moyens de détection (83) comprennent des moyens de détection de tension adaptés pour commander lesdits moyens de contrôle (84, 6) lorsque la tension détectée est égale ou inférieure à une valeur de tension seuil (V_{T}) .

9. Ensemble de coupe selon la revendication 8, dans lequel ledit générateur de tension (7) est un générateur ayant une faible tension de fonctionnement (V_{O}) et une impédance (Z_{O}) approximativement égale à l'impédance créée sur un pont de fermeture de circuit externe à l'outil, via le corps de l'utilisateur, entre lesdits moyens de coupe (1) et ledit élément conducteur de l'électricité (5), audit stade de blessure imminente ; ladite valeur de tension seuil (V_{T}) étant égale à approximativement la moitié de ladite tension de fonctionnement (V_{O}) dudit générateur de tension (7).

10. Ensemble de coupe selon la revendication 9, dans lequel ledit générateur de tension (7) est un générateur ayant une tension de fonctionnement de 5 V et une fréquence de fonctionnement de 100 kHz.

11. Ensemble de coupe selon l'une quelconque des revendications précédentes, dans lequel ledit élément conducteur de l'électricité (5) comprend une petite plaque métallique qui recouvre largement une partie importante de ladite poignée (2a).

12. Ensemble de coupe selon l'une quelconque des revendications précédentes, dans lequel lesdits moyens de coupe (1) comprennent des lames pivotant autour d'une charnière ; lesdits moyens de contrôle (84, 6) étant adaptés pour contrôler l'ouverture desdites lames lorsque ladite valeur seuil est atteinte.
